# EUROPEAN PATENT APPLICATION

(11) **EP 4 818 878 A1**
(43) Date of publication of application: **07.10.2026**
(21) Application number: 25209579.9
(22) Date of filing: 17.10.2025
(51) Int. Cl.: G06F 3/06, G06F 11/14, G06F 11/1471

(54) **METHOD FOR PROCESSING METADATA OF A STORAGE ENGINE, ELECTRONIC DEVICE AND STORAGE MEDIUM**

(30) Priority: 01.04.2025 CN 202510405185
(71) Applicant: Beijing Volcano Engine Technology Co., Ltd., Beijing 100190 (CN)
(72) Inventor: GUO, Zhihong, Beijing, 100028 (CN); GAO, Jiale, Beijing, 10028 (CN); FANG, Liming, Beijing, 100028 (CN); LIU, Jinxin, Beijing, 100028 (CN); DONG, Chengyu, Beijing, 100028 (CN)
(74) Representative: Isarpatent

(57) **Abstract**

A method for processing metadata of a storage engine, an electronic device and a storage medium are provided. The method includes: creating (S201) a checkpoint of each unpersisted metadata chunk in a memory used by the storage engine, persistently storing respective checkpoints in a meta segment of a non-volatile storage medium in sequence, and recording checkpoint index information of the respective checkpoints in the meta segment in the memory; where each metadata chunk includes metadata of a chunk managed by the storage engine; and in response to unpersisted checkpoint index information in the memory reaching a preset data amount, persistently storing (S202) the unpersisted checkpoint index information in the meta segment by means of a checkpoint index information chunk, and adding a pointer to a previous checkpoint index information chunk into the checkpoint index information chunk.

## Description

### TECHNICAL FIELD

Embodiments of the present disclosure relate to a method for processing metadata of a storage engine, an electronic device and a storage medium.

### BACKGROUND

When a user writes data by using a storage engine, metadata of the data is usually cached in a memory used by the storage engine, and then the metadata is centrally and persistently stored in a non-volatile storage medium. In this way, after a device abnormally restarts, the persistently stored metadata may be restored to the memory, to enable the storage engine to continue to provide a service.

However, the metadata is centrally and persistently stored usually by means of timing full persistent storage, which occupies a large amount of resources and is time-consuming, and affects a normal service of the storage engine. **In** particular, for a storage engine based on ZNS (Zoned Namespaces), a data amount of the metadata is larger, and there are more types of the metadata, and thus the centralized persistent storage occupies more resources and takes longer time, which seriously affects the normal service of the storage engine.

### SUMMARY

Embodiments of the present disclosure provide a method and a device for processing metadata of a storage engine, a storage medium, and a program product, to avoid that centralized persistent storage of metadata occupies a large amount of resources and affects a normal service of the storage engine.

According to a first aspect, an embodiment of the present disclosure provides a method for processing metadata of a storage engine, including:
creating a checkpoint of each unpersisted metadata chunk in a memory used by the storage engine, persistently storing respective checkpoints in a meta segment of a non-volatile storage medium in sequence, and recording checkpoint index information of the respective checkpoints in the meta segment in the memory; where each metadata chunk includes metadata of a chunk managed by the storage engine; and
in response to unpersisted checkpoint index information in the memory reaching a preset data amount, persistently storing the unpersisted checkpoint index information in the meta segment by means of a checkpoint index information chunk, and adding a pointer to a previous checkpoint index information chunk into the checkpoint index information chunk.

According to a second aspect, an embodiment of the present disclosure provides a device for processing metadata of a storage engine, including:
a metadata persistence unit, configured to create a checkpoint of each unpersisted metadata chunk in a memory used by the storage engine, persistently store respective checkpoints in a meta segment of a non-volatile storage medium in sequence, and record checkpoint index information of the respective checkpoints in the meta segment in the memory; where each metadata chunk includes metadata of a chunk managed by the storage engine; and
an indexing unit, configured to: in response to unpersisted checkpoint index information in the memory reaching a preset data amount, persistently store the unpersisted checkpoint index information in the meta segment by means of a checkpoint index information chunk, and add a pointer to a previous checkpoint index information chunk into the checkpoint index information chunk.

According to a third aspect, an embodiment of the present disclosure provides an electronic device, including: a processor and a memory;
where the memory stores a computer-executable instruction; and
the processor executes the computer-executable instruction stored in the memory, to enable the at least one processor to execute the method for processing metadata of a storage engine according to the first aspect and various possible designs of the first aspect.

According to a fourth aspect, an embodiment of the present disclosure provides a non-transitory computer-readable storage medium, where a computer-executable instruction is stored in the non-transitory computer-readable storage medium, and when the computer-executable instruction is executed by a processor, the method for processing metadata of a storage engine according to the first aspect and various possible designs of the first aspect is implemented.

According to a fifth aspect, an embodiment of the present disclosure provides a computer program product, including a computer program, where when the computer program is executed by a processor, the method for processing metadata of a storage engine according to the first aspect and various possible designs of the first aspect is implemented.

### BRIEF DESCRIPTION OF DRAWINGS

**In** order to more clearly describe the technical solutions in the embodiments of the present disclosure, the following briefly introduces the drawings required for describing the embodiments. Apparently, the drawings in the following description show some embodiments of the present disclosure, and other drawings may also be obtained by a person of ordinary skill in the art according to these drawings without creative efforts.
Fig. 1 is a diagram showing a scenario example of a method for processing metadata of a storage engine according to an embodiment of the present disclosure;
Fig. 2 is a schematic flowchart of a method for processing metadata of a storage engine according to an embodiment of the present disclosure;
Fig. 3 is a schematic diagram showing a meta segment according to an embodiment of the present disclosure;
Fig. 4 is a schematic flowchart of a method for processing metadata of a storage engine according to another embodiment of the present disclosure;
Fig. 5 is a schematic diagram showing a data segment according to an embodiment of the present disclosure;
Fig. 6 is a block diagram showing the structure of a device for processing metadata of a storage engine according to an embodiment of the present disclosure; and
Fig. 7 is a schematic diagram showing the hardware structure of an electronic device according to an embodiment of the present disclosure.

### DETAILED DESCRIPTION

**In** order to make the objectives, technical solutions, and advantages of embodiments of the present disclosure clearer, the technical solutions in the embodiments of the present disclosure are described clearly and comprehensively below with reference to the drawings in the embodiments of the present disclosure. Apparently, the described embodiments are some but not all of the embodiments of the present disclosure. All other embodiments obtained by a person of ordinary skill in the art based on the embodiments of the present disclosure without creative efforts shall fall within the protection scope of the present disclosure.

First, technical terms in the present disclosure are explained.

Zoned Namespace (ZNS) is a storage technology mainly used for solid state disk (SSD) management, which aims to improve storage efficiency and performance, especially in a scenario that requires sequential write operations.

A non-volatile storage medium, such as a NAND flash memory, is a current mainstream enterprise-level and consumer-level storage NVME (logical device interface specification) SSD which is power-down non-volatile and has a very fast read and write speed.

A segment is a mapping of a basic management unit Zone (physical storage partition) of the ZNS at a storage engine layer, that is, a logical storage partition. The storage partitions mentioned in the following embodiments of the present disclosure may be logical storage partitions, which may be mapped to physical storage partitions according to a mapping relationship. The storage partition for storing the metadata may be referred to as a meta segment; and the storage partition for storing user data may be referred to as a data segment.

A chunk is a file (chunk) managed by the storage engine, and data in one chunk may be written into one or more data segments. If one chunk is written into a plurality of data segments, each data segment includes a part of data of the chunk.

A sector is a basic storage unit for read and write operations of the ZNS device.

A checkpoint is an operation of making the metadata persistent, to ensure fast restoration of the metadata after restart.

A global atomic incrementing number generator is used for distinguishing the sequence of occurrence of atomic operations by size.

Garbage collection (GC): based on the characteristics of NAND, if a chunk is to be overwritten, it needs to be erased first and then written. Before erasure, valid data on the chunk needs to be migrated to other chunks, the valid data needs to be compressed and merged, and then erasure is performed.

When a user writes data by using a storage engine, metadata of the data is usually cached in a memory used by the storage engine, and then the metadata is centrally and persistently stored in a non-volatile storage medium, so that the persistently stored metadata may be restored to the memory after a device abnormally restarts, to enable the storage engine to continue to provide a service.

However, the metadata is centrally and persistently stored usually by means of timing full persistent storage, which occupies a large amount of resources, and some metadata needs to be persisted repeatedly every time, and it is time-consuming, which affects a normal service of the storage engine. **In** particular, for a storage engine based on ZNS (Zoned Namespaces), as the capacity density of a storage device becomes larger and larger, a storage partition of the ZNS will become larger and larger, a data amount of the metadata is larger, and there are more types of the metadata, and thus the centralized persistent storage occupies more resources and takes longer time, which seriously affects the normal service of the storage engine.

**In** order to solve the above technical problem, an embodiment of the present disclosure provides a method for processing metadata of a storage engine. By means of block persistent storage of unpersisted metadata in the memory and block persistent storage of unpersisted checkpoint index information, it may be avoided that the centralized persistent storage occupies a large amount of resources and affects normal use of the storage engine by a user; and when the metadata is restored, checkpoints may be quickly found based on a checkpoint index information chunk and restored to the memory, to improve restoration efficiency of the metadata, thereby also improving the reliability and availability of the storage engine system.

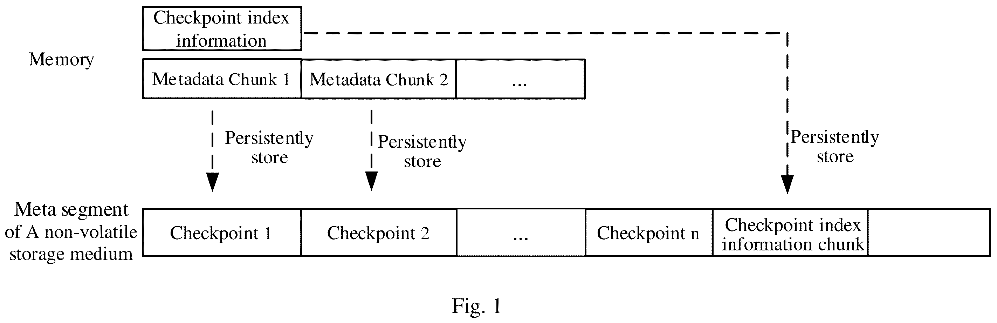

The application scenario of the method for processing metadata of a storage engine according to the embodiments of the present disclosure is shown in Fig. 1. A checkpoint of each unpersisted metadata chunk in a memory used by the storage engine is created, respective checkpoints are persistently stored in a meta segment of a non-volatile storage medium in sequence, and checkpoint index information of the respective checkpoints in the meta segment is recorded in the memory; where each metadata chunk includes metadata of a chunk managed by the storage engine; and in response to unpersisted checkpoint index information in the memory reaching a preset data amount, the unpersisted checkpoint index information is persistently stored in the meta segment by means of a checkpoint index information chunk, and a pointer to a previous checkpoint index information chunk is added into the checkpoint index information chunk, where any checkpoint index information chunk is used for: when the metadata is restored, finding, according to checkpoint index information in the any checkpoint index information chunk, corresponding checkpoints from the meta segment and restoring the checkpoints to the memory, and finding the previous checkpoint index information chunk by using the pointer to the previous checkpoint index information chunk.

It should be noted that the user information and data (including but not limited to data for analysis, stored data, displayed data, etc.) involved in the present disclosure are information and data authorized by the user or fully authorized by all parties, and the collection, use and processing of the relevant data need to comply with the relevant laws, regulations and standards of the relevant countries and regions, and a corresponding operation entry is provided for the user to choose to authorize or reject.

The method for processing metadata of a storage engine according to the present disclosure is described in detail below with reference to specific embodiments.

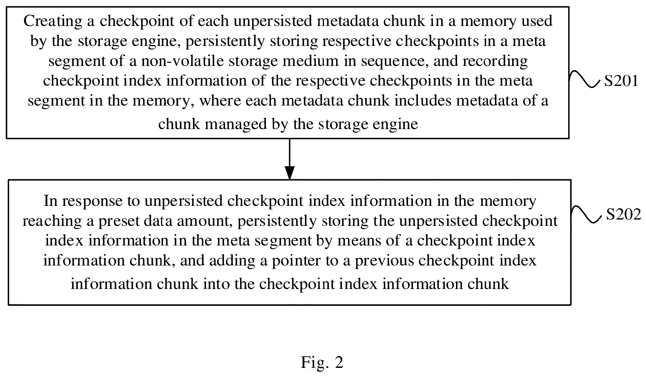

Referring to Fig. 2, Fig. 2 is a schematic flowchart of a method for processing metadata of a storage engine according to an embodiment of the present disclosure. The method of this embodiment may be applied to a terminal device or a server. The method for processing metadata of a storage engine includes the following.

S201: creating a checkpoint of each unpersisted metadata chunk in a memory used by the storage engine, persistently storing respective checkpoints in a meta segment of a non-volatile storage medium in sequence, and recording checkpoint index information of the respective checkpoints in the meta segment in the memory, where each metadata chunk includes metadata of a chunk managed by the storage engine.

**In** this embodiment, when storing data, the storage engine stores the metadata in the memory, and then centrally and persistently stores the metadata in the non-volatile storage medium according to certain rules. When a ZNS-based storage engine stores data, since the ZNS opens the management permission for the storage medium and transfers part of management responsibility to the storage engine host, a large amount of metadata may exist in the memory used by the ZNS storage engine, and there are relatively many types of metadata. If the data is centrally and persistently stored in the non-volatile storage medium, a large amount of resources are occupied, which affects the normal use of the storage engine by the user. Therefore, in this embodiment, for the metadata in the memory used by the storage engine, a checkpoint is created for each chunk, and the chunks are persistently stored in a meta segment of the non-volatile storage medium in sequence. Specifically, since the storage engine may perform management at a granularity of a chunk (where the chunk may also be referred to as a file), when the metadata is persistent, the metadata in the memory may be divided into blocks according to the chunk, that is, one chunk corresponds to one metadata chunk, and the metadata chunk is persistently stored in the meta segment of the non-volatile storage medium. **In** this way, the centralized persistent storage of the metadata in the memory may be avoided, the impact of the persistence process on the user's use of the storage engine may be avoided, and at the same time, it may be avoided that the metadata occupies too much storage space, thereby ensuring the storage space amount available for the user.

Considering that the meta segment is usually relatively large and the number of active meta segments at the same time is limited, the meta segment may store a large number of metadata chunks and many types of metadata chunks. Therefore, the checkpoint index information of the checkpoints in the meta segment is required to quickly find the checkpoints. Therefore, each time a checkpoint is persistently stored in the meta segment, the checkpoint index information of the checkpoint in the meta segment may be recorded in the memory, so that when the metadata is subsequently restored, the checkpoint index information may be first restored in the memory, and the checkpoint may be found according to the checkpoint index information, thereby accelerating the process of restoring the metadata according to the checkpoint.

S202: in response to unpersisted checkpoint index information in the memory reaching a preset data amount, persistently storing the unpersisted checkpoint index information in the meta segment by means of a checkpoint index information chunk, and adding a pointer to a previous checkpoint index information chunk into the checkpoint index information chunk.

**In** this embodiment, since the checkpoint index information of the checkpoints in the meta segment is used to implement fast finding and loading of the checkpoints when the metadata is restored, the checkpoint index information also needs to be persistently stored, to avoid loss due to abnormal restart when the checkpoint index information is only stored in the memory. Since the meta segment is relatively large and the number of checkpoints may also be relatively large, the data amount of the checkpoint index information is also very large.

For example, the larger the chunk written by the user, the less the amount of data indexes, the less the metadata of the chunk, and the less the space required for creating a checkpoint. Taking the size of the chunk written by the user being 128k as an example, it is estimated that the checkpoint data amount of a single chunk of metadata is approximately: more than one hundred bytes (basic metadata of the chunk) + 64M/128k*8 (chunk data index) = 4096 + x bytes, which requires approximately 8k of storage space. It is roughly estimated that in the case that the capacity of the meta segment is 10G, the maximum number of checkpoints that may be accommodated is: 10G * 1024 * 1024 / 8k = 1310720; and the size of one piece of checkpoint index information is 20 bytes, so the total amount of checkpoint index information of all checkpoints in the entire meta segment is: 20*1310720 / 1024/1024 = 25MB.

If the checkpoint index information is persistently stored in a full amount at one time, it also occupies a large amount of resources, which affects the normal use of the storage engine by the user, and it is also time-consuming during loading, and if there is an abnormal restart before the persistence is completed, the checkpoint index information will be lost. Therefore, in this embodiment, the checkpoint index information in the memory is also persistently stored in blocks, and the data amount of each checkpoint index information chunk is a preset data amount, that is, when the unpersisted checkpoint index information in the memory reaches the preset data amount, it is persistently stored in the meta segment as a checkpoint index information chunk, that is, the checkpoint index information chunk is stored mixed with the checkpoints in the meta segment, which means that in the meta segment, there is a checkpoint index information chunk after some checkpoints, and after this checkpoint index information chunk there are some checkpoints, and after these checkpoints there is another checkpoint index information chunk, and so on.

A pointer to a previous checkpoint index information chunk may be added to each checkpoint index information chunk, and the respective checkpoint index information chunks are connected by the pointers. **In** this way, when the metadata is restored, the last checkpoint index information chunk may be first found from the meta segment, and then the previous checkpoint index information chunk may be found from the meta segment according to the pointer in the last checkpoint index information chunk, and so on, each of the checkpoint index information chunks may be quickly found from the meta segment, and the corresponding checkpoints may be found from the meta segment and restored to the memory according to the checkpoint index information in the checkpoint index information chunks.

Further, when the meta segment is full, a pointer to the last checkpoint index information chunk is added to the segment footer (SegmentFooter) of the meta segment, for finding the last checkpoint index information chunk by using the pointer to the last checkpoint index information chunk. During specific implementation, when the metadata is restored, it may be directly determined, according to the segment footer of the meta segment, whether there is the pointer to the last checkpoint index information chunk. If there is the pointer to the last checkpoint index information chunk, it means that the meta segment is full. At this time, the last checkpoint index information chunk may be directly found according to the pointer to the last checkpoint index information chunk, and then the previous checkpoint index information chunk is found according to the pointer included in the last checkpoint index information chunk, and so on, each of the checkpoint index information chunks may be quickly found from the meta segment, without additionally searching for the last checkpoint index information chunk from the meta segment.

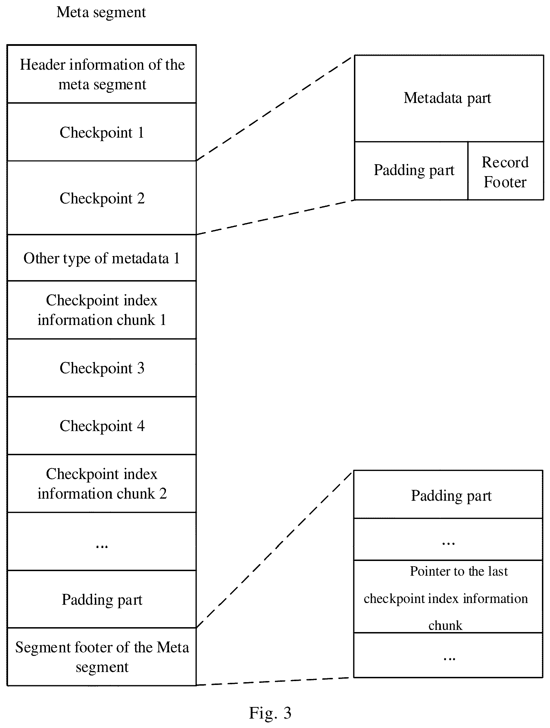

As an example, the structure of the meta segment (MetaSegment) may be shown in Fig. 3, which includes the header information (SegmentHeader) of the meta segment, each of the checkpoints, various other types of metadata, each of the checkpoint index information chunks, and the tail information (SegmentFooter), and may also include a padding part (zero padding), where each of the checkpoint index information chunks are not concentrated together, but are mixed with each of the checkpoints and various other types of metadata. The segment footer (SegmentFooter) of the meta segment includes information such as the status, structure, attributes, etc. of the meta segment, and may also include a padding part, and if it is full, it also includes the pointer to the last checkpoint index information chunk. Certainly, the checkpoint index information chunk also includes header information and tail information, but the content is different from that of the checkpoint and other types of metadata, and may be used to distinguish the checkpoint index information chunk from the checkpoint and other types of metadata.

Each checkpoint and other types of metadata include at least a metadata part (payload) and tail information (Record Footer), and may also include a padding part (zero padding), where the Record Footer records the index information about the current checkpoint or the current metadata, including but not limited to the position, length, type, etc., for a scanning process when the metadata is subsequently restored. It should be noted that although the Record Footer is also index information, it is only the index information of the current checkpoint or the current metadata, and is persistent together with the current checkpoint or the current metadata, and the index information may be acquired only by scanning one by one during restoration, while the checkpoint index information chunk includes the checkpoint index information of a plurality of checkpoints, and is persistent in batches, and the checkpoint index information of the plurality of checkpoints can be acquired at one time during restoration, without the need to scan each checkpoint separately.

**In** the method for processing metadata of a storage engine provided in this embodiment, a checkpoint of each unpersisted metadata chunk in a memory used by the storage engine is created, respective checkpoints are persistently stored in a meta segment of a non-volatile storage medium in sequence, and checkpoint index information of the respective checkpoints in the meta segment is recorded in the memory; where each metadata chunk includes metadata of a chunk managed by the storage engine; and in response to unpersisted checkpoint index information in the memory reaching a preset data amount, the unpersisted checkpoint index information is persistently stored in the meta segment by means of a checkpoint index information chunk, and a pointer to a previous checkpoint index information chunk is added into the checkpoint index information chunk. **In** this embodiment, by means of block persistent storage of unpersisted metadata in the memory and block persistent storage of unpersisted checkpoint index information, it may be avoided that the centralized persistent storage occupies a large amount of resources and affects normal use of the storage engine by a user; and when the metadata is restored, the checkpoints may be quickly found based on the checkpoint index information chunk and restored to the memory, to improve restoration efficiency of the metadata, and at the same time, it is avoided that the metadata occupies too much storage space, thereby ensuring a storage space amount available for the user.

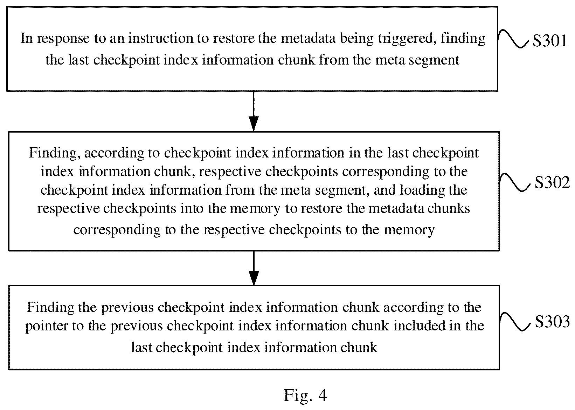

Based on any of the above embodiments, if the device where the storage engine is located abnormally restarts, the metadata in the memory used by the storage engine is lost, and thus the metadata may be restored according to the checkpoints in the meta segment. A specific metadata restoration process may be shown in Fig. 4, which includes the following steps.

S301: in response to an instruction to restore the metadata being triggered, finding the last checkpoint index information chunk from the meta segment.

S302: finding, according to checkpoint index information in the last checkpoint index information chunk, respective checkpoints corresponding to the checkpoint index information from the meta segment, and loading the respective checkpoints into the memory to restore the metadata chunks corresponding to the respective checkpoints to the memory.

S303: finding the previous checkpoint index information chunk according to the pointer to the previous checkpoint index information chunk included in the last checkpoint index information chunk.

**In** this embodiment, the instruction to restore the metadata may be triggered after the abnormal restart, or the instruction to restore the metadata may be triggered in other cases where the metadata needs to be restored. When the instruction to restore the metadata is triggered, restoration of the metadata to the memory used by the storage engine is started. Specifically, when only the checkpoints corresponding to the metadata chunks are persistently stored in the meta segment of the non-volatile storage medium, there is no checkpoint index information chunk, these checkpoints need to be found from the meta segment and then loaded into the memory. In this embodiment, since the checkpoint index information chunk is also persistently stored in the meta segment, these checkpoints may be found more quickly according to the checkpoint index information chunk. Therefore, the checkpoint index information chunk needs to be first found from the meta segment. Since each checkpoint index information chunk includes the pointer to the previous checkpoint index information chunk, it is only necessary to find the last checkpoint index information chunk from the meta segment, and the previous checkpoint index information chunk may be found according to the pointer in the last checkpoint index information chunk, and then the checkpoint index information chunk may be continuously found forward according to the pointer in the previous checkpoint index information chunk, so that all checkpoint index information chunks in the meta segment may be found.

Each checkpoint index information chunk includes the checkpoint index information of some checkpoints in the meta segment, and thus the checkpoints may be found according to the checkpoint index information, and then the checkpoints are loaded into the memory used by the storage engine, thereby implementing restoration of the metadata chunks corresponding to the checkpoints to the memory.

Optionally, when the last checkpoint index information chunk is found from the meta segment in S301, the step may include:
in response to a pointer to the last checkpoint index information chunk existing in segment footer of the meta segment, finding the last checkpoint index information chunk according to the pointer to the last checkpoint index information chunk; or
in response to the pointer to the last checkpoint index information chunk not existing in the segment footer of the meta segment, scanning the meta segment from back to front to find the last checkpoint index information chunk.

**In** this embodiment, since when the meta segment is full, the pointer to the last checkpoint index information chunk is added to the segment footer (SegmentFooter) of the meta segment, when the last checkpoint index information chunk is found, it may first be determined whether there is the pointer to the last checkpoint index information chunk in the segment footer of the meta segment. **If** there is the pointer to the last checkpoint index information chunk, it means that the meta segment is full. At this time, the last checkpoint index information chunk may be directly found according to the pointer to the last checkpoint index information chunk. If there is no pointer to the last checkpoint index information chunk, it means that the meta segment is not full. At this time, the meta segment may be scanned from back to front, and it may be determined whether the object is a checkpoint index information chunk according to the tail information of the scanned object, until the checkpoint index information chunk, that is, the last checkpoint index information chunk in the meta segment, is found.

Based on the above embodiment, since there is a time interval for the persistence of the checkpoint index information chunk, a checkpoint index information chunk may be persistently stored only when the unpersisted checkpoint index information in the memory reaches the preset data amount. Therefore, if there is an abnormal restart when the unpersisted checkpoint index information in the memory does not reach the preset data amount, the unpersisted checkpoint index information in the memory will be lost. In practice, there may still be some checkpoints after the last checkpoint index information chunk in the meta segment, but there is no time to make the checkpoint index information persistent. In the above embodiment, the checkpoints are found only based on the checkpoint index information chunk, and the checkpoints after the last checkpoint index information chunk will be missed. Therefore, before the last checkpoint index information chunk is found, the scanned checkpoints may be loaded into the memory, that is, the checkpoints after the last checkpoint index information chunk are also loaded into the memory, to ensure the integrity of the metadata. Certainly, if there is no checkpoint after the last checkpoint index information chunk, this process does not need to be performed.

In addition, in the case that the pointer to the last checkpoint index information chunk exists in the segment footer of the meta segment, there may or may not be a checkpoint after the last checkpoint index information chunk, and if there is a checkpoint, the checkpoint after the last checkpoint index information chunk is also loaded into the memory.

Based on any of the above embodiments, when the checkpoints are loaded into the memory, considering that the same chunk in the storage engine may be operated on multiple times, the chunk has multiple metadata chunks, that is, corresponds to multiple checkpoints. Therefore, if multiple checkpoints related to the same chunk in the storage engine are found, the latest checkpoint of the multiple checkpoints related to the same chunk is loaded into the memory, and the other checkpoints than the latest checkpoint in the multiple checkpoints related to the same chunk are ignored, to avoid the subsequent operation being overwritten by the previous operation. Specifically, the sequence of the checkpoint time may be compared according to the creation time information of each checkpoint or an atomic operation count value, where the atomic operation count value may be generated by a global atomic incrementing number generator, and is used to record the sequence of atomic operations.

Based on any of the above embodiments, considering that it also takes a certain time to create a checkpoint of the metadata chunk and perform persistent storage, there may still be a small number of metadata chunks that have not had time to complete checkpoint creation and persistent storage during abnormal restart, and the metadata of this part in the memory will be lost. Considering that the log of the storage engine records some operations on the chunks in the storage engine, and the log will not be lost due to abnormal restart, some metadata that has not had time to complete checkpoint creation and persistent storage may also be restored based on the log of the storage engine, specifically as follows:
acquiring a first log data set after the creation time of the last checkpoint in the meta segment from the log of the storage engine; and
replaying log data in the first log data set in sequence according to a time sequence, to generate, in the memory, metadata after the creation time of the last checkpoint.

In this embodiment, the log data after the creation time of the last checkpoint in the meta segment may be acquired from the log of the storage engine, as the first log data set. Specifically, the first log data set after the creation time of the last checkpoint may be found according to a timestamp or an atomic operation count value. Further, the log data in the first log data set may be replayed in sequence according to the time sequence (the sequence of timestamps or the atomic operation count value from small to large). During the replaying process, some metadata, that is, the metadata after the creation time of the last checkpoint, may be generated in the memory, which can supplement the metadata restored from the checkpoint, thereby improving the integrity of the metadata.

Based on the above embodiment, it is impossible to trigger creation of a checkpoint or record a piece of log data for each write data, otherwise the data amount of the metadata and the data amount of the log are too large, and the write performance of the storage engine is affected. Therefore, a part of the metadata still cannot be restored based on the above checkpoints and log data, that is, the metadata corresponding to the data written after the creation time of the last checkpoint and not recorded in the log data. The metadata corresponding to such data is also lost after the abnormal restart. In order to restore the metadata of this part of data, in this embodiment, in the data segment of the storage engine, the data written after the creation time of the last checkpoint is scanned, and the data written after the creation time of the last checkpoint is generated into the corresponding metadata in the memory by scanning, so that the integrity of the metadata in the memory is ensured.

Based on any of the above embodiments, in addition to the metadata corresponding to the chunk, there is other types of metadata in the memory used by the storage engine, for example, the metadata of the data segment (SegmentMeta) of the storage engine, which records the information such as the state, the usage amount, the garbage amount, etc., of the data segment, where the state of the data segment includes a full state, an empty state, or a partially used state of the data segment. When the data index is restored, it is determined whether the data segment is empty, and if it is empty, there is no need to restore the data index corresponding to this data segment.

Since the data amount of the metadata of the data segment of the storage engine is not large, the metadata of the data segment of the storage engine may be persistently stored in the non-volatile storage medium in the persistence process. **In** a specific implementation, the metadata of the data segment of the storage engine may be periodically and fully and persistently stored in the non-volatile storage medium.

Considering that the metadata of the data segment is periodically and persistently stored in the non-volatile storage medium, and there is a certain time interval between the abnormal restart time and the persistent storage time of the metadata of the data segment, the metadata of the data segment may change in this time interval. Therefore, when the metadata of the data segment is restored to the memory, after the metadata of the data segment is acquired from the non-volatile storage medium, the log data after the persistent storage time of the metadata of the data segment in the log of the storage engine may also be combined to determine the change in the metadata of the data segment in this time interval, to completely restore the metadata of the data segment.

Based on any of the above embodiments, the memory used by the storage engine further includes another two types of metadata. One is the metadata of the mapping relationship between the internal identification (Inode Id) of the chunk in the storage engine and the external identification (Chunk Id) of the chunk, where the external identification is the external name of the chunk, which has more physical meaning, and the internal identification is the mapping of the storage engine to the external identification, and the internal identification is used for both metadata management and restart. The other is the basic metadata information of the chunk, which records the information such as the logical length and the physical length of the chunk, and the basic metadata of one chunk is approximately several tens of K or more than one hundred K. It should be noted that if a chunk is invalid or deleted, the mapping relationship corresponding to the chunk must not exist in the mapping relationships, and therefore whether the chunk is a valid chunk may be determined according to the mapping relationship.

Similarly, since the data amount is not large, the metadata of the mapping relationship may be fully and persistently stored in the non-volatile storage medium in the persistence process, or the basic metadata of the chunk may be fully and persistently stored in the non-volatile storage medium, specifically in the meta segment.

Correspondingly, the finding, according to the checkpoint index information in the last checkpoint index information chunk, respective checkpoints corresponding to the checkpoint index information from the meta segment and loading the respective checkpoints into the memory includes:
restoring the mapping relationship between the internal identification of the chunk in the storage engine and the external identification of the chunk to the memory; and
finding, according to the checkpoint index information in the last checkpoint index information chunk, the corresponding checkpoints from the meta segment, screening valid checkpoints according to the mapping relationship, and loading the valid checkpoints into the memory.

In this embodiment, the above mapping relationship may be first restored to the memory, and then after each checkpoint is found, the valid checkpoints may be screened according to the mapping relationship, and the checkpoints corresponding to the invalid or deleted chunk may be eliminated, so that only the valid checkpoints need to be loaded, thereby avoiding resource waste caused by the loading of invalid checkpoints and improving the restoration speed of the metadata.

Considering that the mapping relationship is periodically and persistently stored in the non-volatile storage medium, and there is a certain time interval between the abnormal restart time and the persistent storage time of the mapping relationship, the mapping relationship may change in this time interval. Therefore, when the mapping relationship is restored to the memory, after the mapping relationship is acquired from the non-volatile storage medium, the log data after the persistent storage time of the mapping relationship in the log of the storage engine may also be combined to determine the chunk that is invalid or deleted in this time interval, and the mapping relationships of these chunks are deleted, and/or to determine the newly created chunk in this time interval, and the mapping relationship of the newly created chunk is added, thereby implementing the complete restoration of the mapping relationship, and also ensuring the accuracy of valid checkpoint determination.

Based on any of the above embodiments, as an example, this embodiment provides a metadata restoration method, which may specifically include:
1) finding, from the non-volatile storage medium, the latest metadata of the data segment of the storage engine, the metadata of the mapping relationship between the internal identification of the chunk in the storage engine and the external identification of the chunk, and the basic metadata information of the chunk;
   optionally, various types of metadata may be further parsed into corresponding metadata management modules;
2) acquiring the log data of the storage engine, and parsing the log data and saving it into the memory;
3) updating the metadata of the data segment of the storage engine and the metadata of the mapping relationship according to the log data;
   further, the basic metadata information of the chunk may also be updated according to the updated mapping relationship, that is, the invalid chunk is determined according to the updated mapping relationship, and the basic metadata information of the invalid chunk is deleted;
4) determining whether the data segment is empty according to the state information in the metadata of the data segment of the storage engine;
   if it is not empty, finding the last checkpoint index information chunk associated with the data segment from the meta segment;
   finding the previous checkpoint index information chunk according to the pointer to the previous checkpoint index information chunk included in the last checkpoint index information chunk, and so on, until all checkpoint index information chunks are found;
   finding, according to the checkpoint index information in each checkpoint index information chunk, the respective checkpoints corresponding to the checkpoint index information from the meta segment, screening valid checkpoints according to the mapping relationship, and loading the valid checkpoints into the memory, to restore the metadata chunks corresponding to the valid checkpoints to the memory; and
   loading the checkpoints after the last checkpoint index information chunk in the meta segment into the memory after the valid checkpoints are screened;
5) acquiring the first log data set after the creation time of the last checkpoint in the meta segment from the log of the storage engine; and replaying the log data in the first log data set in sequence according to the time sequence, to generate, in the memory, the metadata after the creation time of the last checkpoint; and
6) scanning, in the data segment of the storage engine, the data written after the creation time of the last checkpoint, to generate, in the memory, the data written after the creation time of the last checkpoint into the corresponding metadata.

Through the above metadata restoration process, the integrity of metadata restoration can be improved as much as possible.

Based on any of the above embodiments, for an exit scenario of the storage engine, there is enough time for the persistent storage of the metadata (that is, graceful exit), and all unpersisted metadata chunks in the memory may be persistently stored at one time and then exit. The specific process may be as follows:
in response to an instruction to exit the storage engine, creating a checkpoint of each of all unpersisted metadata chunks in the memory, persistently storing respective checkpoints into the meta segment in sequence, adding a first identification after a last checkpoint, and then executing the instruction to exit the storage engine, where the first identification is used to represent that the storage engine normally exits; and
in response to the instruction to restore the metadata being triggered, scanning the meta segment from back to front, and in response to the first identification being detected, loading the checkpoints in the meta segment into the memory to restore the full amount of metadata in the memory; and adding a second identification after the first identification, where the second identification is used to represent that the first identification is invalid.

**In** this embodiment, in the case of graceful exit, a checkpoint of each of all unpersisted metadata chunks in the memory may be created and all the checkpoints are persistently stored in the meta segment. Certainly, the unpersisted checkpoint index information in the memory may also be persistently stored in the meta segment. **In** order to facilitate fast metadata restoration during restart, a first identification may be added to the storage space after the last checkpoint in the meta segment, to represent that the storage engine normally exits (graceful exit). Therefore, when the instruction to restore the metadata is triggered, the meta segment is scanned from back to front, and if the first identification is scanned, the checkpoints in the meta segment may be loaded into the memory, where the checkpoints are found and restored in the same way as in the above embodiment, which will not be repeated here. Through the method in this embodiment, the process of replaying the log data and scanning the data in the data segment of the storage engine to restore part of the metadata does not need to be performed again, which makes the metadata restoration process simpler and more efficient.

However, it should be noted that the first identification needs to be invalidated immediately after the metadata is restored, otherwise, the next time the storage engine abnormally exits (non-graceful exit), if the meta segment is scanned from back to front, and if the first identification is scanned again, an incorrect judgment will be made, and the process of replaying the log data and scanning the data in the data segment of the storage engine to restore part of the metadata will no longer be performed, resulting in the loss of a part of the metadata. In this embodiment, a second identification may be written after the first identification, and the second identification is used to represent that the first identification is invalid. In this way, when the meta segment is scanned from back to front, if the second identification is scanned first, it indicates that the first identification is invalid, and the metadata needs to be restored according to the normal process, including restoring the metadata based on the checkpoints, replaying the log data, and scanning the data in the data segment of the storage engine to restore part of the metadata. If the first identification is scanned first, it indicates that the exit is graceful, and only the metadata needs to be restored based on the checkpoints, and there is no need to perform the process of replaying the log data and scanning the data in the data segment of the storage engine to restore part of the metadata.

In addition, during garbage collection, when the metadata is relocated, a second identification is first written into the meta segment. Regardless of whether there is a first identification before the second identification, the second identification may be used to tell the storage engine system that other operations have been performed after restart, and all previous first identifications have been invalidated.

Based on any of the above embodiments, the most important item for restoring the metadata in the memory is the restoration of the data index, where the data index is the position information of each piece of data in the chunk. Since no data may be continuously written into the storage engine after the creation time of the last checkpoint before the abnormal restart, the data index information in the checkpoint is complete. If data continues to be written into the storage engine, the data index information in the checkpoint is incomplete, and the data index information of the data written after the creation time of the last checkpoint will be lost during the abnormal restart.

Each checkpoint includes the data index information of the corresponding chunk, which is recorded as the first data index information; and the data index information of the data written into the storage engine after the creation time of the last checkpoint in the meta segment is recorded as the second data index information.

It may be determined whether data is written into the storage engine after the creation time of the last checkpoint, to select different manners of loading the data index information. Specifically, it may be as follows:
comparing the write time of each chunk in the data segment of the storage engine with the creation time of the corresponding checkpoint;
in response to the write time of all chunks being earlier than the creation time of the corresponding checkpoints, loading the first data index information in the checkpoint into the memory; or
in response to the write time of at least one chunk being not earlier than the creation time of the corresponding checkpoint, loading the first data index information in the checkpoint and the second data index information of the data written into the storage engine after the creation time of the last checkpoint in the meta segment into the memory.

In this embodiment, the write time of each chunk in the data segment of the storage engine is compared with the creation time of the corresponding checkpoint. If the write time of all chunks is earlier than the creation time of the corresponding checkpoints, it indicates that no data is written into the storage engine after the creation time of the last checkpoint, and the first data index information in the checkpoint is the full amount of data index information, and only the first data index information in the checkpoint needs to be loaded into the memory. If the write time of at least one chunk is not earlier than the creation time of the corresponding checkpoint, it indicates that data is written into the storage engine after the creation time of the last checkpoint, and the first data index information in the checkpoint is incomplete. The first data index information in the checkpoint and the second data index information of the data written into the storage engine after the creation time of the last checkpoint in the meta segment need to be loaded into the memory, to complete the loading of the full amount of data index information.

Based on the above embodiment, considering that it is very time-consuming to load the first data index information in each checkpoint into the memory, which results in that the storage engine cannot provide a service for a long time after restart, affecting the service quality of the storage engine, and it takes a relatively short time to acquire the second data index information, in this embodiment, the first data index information in the checkpoint may be loaded on demand. The specific process is as follows:
scanning the data segment of the storage engine to acquire the second data index information, and loading the second data index information into the memory; and
in response to any operation instruction for any target data in the data segment being received and in response to the data index information of the target data not existing in the memory, determining a target checkpoint in which the data index information of the target data is located, loading the first data index information in the target checkpoint into the memory, and fusing it with the second data index information.

**In** this embodiment, the second data index information obtained through scanning may be first loaded into the memory, for example, it may be temporarily saved in a memory data structure. After the storage engine provides the service, for any operation instruction for any target data in the data segment of the storage engine, including but not limited to operation instructions such as read, write, delete, freeze, and invalidate, the data index information of the target data is searched for in the memory. If the data index information of the target data is not found from the memory, the target checkpoint in which the data index information of the target data is located is determined, that is, a target chunk in which the target data is located is determined, and then the checkpoint of the metadata chunk corresponding to the chunk is determined, the first data index information in the target checkpoint is loaded into the memory and fused with the second data index information, to obtain the complete data index information of the target chunk. Further, the data index information of the target data may be found, and then the operation instruction may be executed for the target data.

In another optional embodiment, the data segment of the storage engine is scanned to acquire the second data index information, and the second data index information is loaded into the memory; and when any operation instruction for any target chunk in the data segment is received, including but not limited to operation instructions such as read, write, delete, freeze, and invalidate for the target chunk, the first data index information in the target checkpoint of the metadata chunk corresponding to the target chunk is loaded into the memory and fused with the second data index information, to obtain the complete data index information of the target chunk. Further, the operation instruction may be executed for the target chunk.

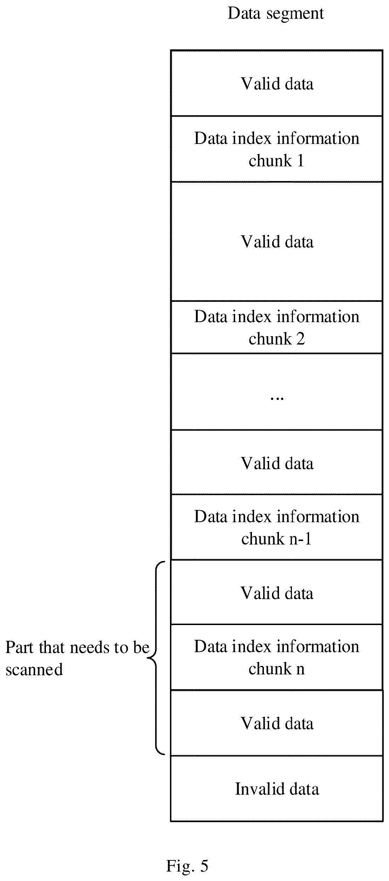

Based on the above embodiment, the data segment of the storage engine includes not only the data (that is, user data) of the storage engine, but also the data index information of the data in the data segment, for fast restoration of the data index information after the storage engine restarts. However, since the data segment is very large and the data written by the user is relatively small, there may be a large amount of data index information, which may reach several tens of MB or even hundreds of MB. In order to accelerate the fast restoration of the data index information after restart, and at the same time, to reduce the switching jitter of the data segment caused by one-time persistence of the data index information in the data segment, in this embodiment, block persistence is adopted for the data index information, that is, when the unpersisted data index information reaches a second preset data amount, one persistent storage of the data index information is executed, that is, the unpersisted data index information is persistently stored in the data segment by means of a data index information chunk. The position of the data index information chunk is not fixed, and the data index information chunks are dispersed in the data segment, mixed in the data in the data segment. A pointer to the previous data index information chunk may be added to each data index information chunk, and all data index information chunks may be linked through the pointer. As long as any data index information chunk is found, all data index information chunks before that data index information chunk may be found in turn, and then the data index information included in each data index information chunk may be acquired. The position of the data index information chunk is shown in Fig. 5.

Therefore, in the above embodiment, when the data segment of the storage engine is scanned to acquire the second data index information, the second data index information after the creation time of the last checkpoint may be found through the data index information chunk in the data segment.

When the data index information chunk in the data segment is found, generally, the last data index information chunk, such as the data index information chunk n in Fig. 5, may be found first, and then the remaining data index information chunks are found forward in turn according to the pointer. However, considering that the data segment supports concurrent write requests, when processing the concurrent write requests, an address for data writing is allocated first and then the writing is performed, so the data index information may be acquired first, but the data writing has not been completed yet, resulting in that the data index information chunk may have been persistently stored in the data segment during abnormal restart, but the data writing has not been completed yet. In addition, when each data index information chunk is persistently stored, it is necessary to ensure that the previous data index information chunk and its related data have been persistently stored before the persistent storage may be continued. Therefore, the last data index information chunk in the data segment is not necessarily valid, but the data index information chunks before the last data index information chunk are valid, that is, the second last data index information chunk n-1 and the data index information chunks n-2, n-3,... before it are valid. Therefore, the data index information in the last data index information chunk may be discarded, and the data index information in the second last data index information chunk and the data index information chunks before it may be used. For the data after the second last data index information chunk, the data index information may be generated by scanning.

Specifically, the scanning the data segment of the storage engine to acquire the second data index information and loading the second data index information into the memory may include:
scanning the data segment from back to front until the second last data index information chunk in the data segment is scanned, and according to the pointer to the previous data index information chunk, finding the remaining data index information chunks in the data segment forward in turn;
acquiring data index information of the data after the second last data index information chunk; and
screening data index information of data written into the data segment after the creation time of the last checkpoint from the data index information of the data after the second last data index information chunk and the data index information included in the second last data index information chunk and the remaining data index information chunks, and loading it into the memory as the second data index information.

In this embodiment, the data segment may be scanned from back to front, the last data index information chunk (that is, the first data index information chunk scanned) in the data segment is ignored, until the second last data index information chunk (that is, the second data index information chunk scanned) in the target storage region is scanned. The previous data index information chunk is found according to the pointer to the previous data index information chunk in the second last data index information chunk, and the data index information chunk is continuously found forward according to the pointer in the previous data index information chunk, until the remaining data index information chunks are found. The index information of the data after the second last data index information chunk may be obtained by scanning.

In this way, the data index information of the data written into the data segment after the creation time of the last checkpoint may be screened out from the index information of the data after the second last data index information chunk, the second last data index information chunk, and the data index information included in the remaining data index information chunks before the second last data index information chunk, and loaded into the memory as the second index information.

Optionally, the index information of the data after the second last data index information chunk is obtained by scanning, which may be specifically implemented through the following solution:

The data in the data segment is stored in a basic storage unit (sector), the minimum storage unit is generally 4K, and the tail information (sector footer) of each basic storage unit records the metadata related to 4K data, where the metadata includes but is not limited to the internal identification (Inode ID) of the chunk to which the data in the basic storage unit belongs, the data index information, etc., the data index information includes offset information (offset, poffset), length information, etc., and the tail information and the data in the basic storage unit are persistently stored together. Therefore, when the data after the second last data index information chunk is scanned, the data index information may be obtained according to the segment footer of each basic storage unit.

It should be noted that since data writing in any size is supported, in order to save physical space, multiple pieces of user write data are supported to be merged into one basic storage unit. The segment footer of the basic storage unit records the metadata of multiple pieces of write data, including the internal identification and index information of the chunk to which each piece of data belongs. Because the merge write of multiple chunks in the basic storage unit is supported, the length of the segment footer of the basic storage unit includes a part of unfixed chunk index information and other fixed information.

If the user's write data is relatively large, it may cross multiple basic storage units. **In** order to ensure the atomicity of the user's one write operation during the restart scanning process, the segment footer of the basic storage unit also records the total number of basic storage units (sector num) crossed by one piece of data and the sequence (sector index) of the current basic storage unit in the crossed basic storage units. During scanning, if all the crossed basic storage units are successfully scanned, it indicates that the piece of data is valid, and the data index information in the crossed basic storage units may be acquired. If at least one of the crossed basic storage units is not successfully scanned (for example, lost), it indicates that the piece of data is invalid, and there is no need to acquire the data index information in all crossed basic storage units.

Based on any of the above embodiments, in the metadata of the data segment of the storage engine, the garbage amount information is a key input parameter for the garbage collection strategy selection of the data segment, and its accuracy determines the efficiency of garbage collection, thereby determining the write amplification during the operation of the storage engine system. The metadata of the data segment of the storage engine is usually persistently stored in the meta segment from the memory periodically. If there is a certain time interval between the abnormal restart time and the persistent storage of the metadata of the data segment, the metadata of the data segment will be inaccurate, and the garbage amount information in it will no longer be accurate. Therefore, in at least one embodiment, the metadata of the data segment may be acquired from the meta segment, the first garbage amount information is acquired from it, and then the first garbage amount information is supplemented in combination with the log of the storage engine, to more accurately restore the garbage amount information of the data segment. Specifically, it may be as follows:
acquiring first garbage amount information included in metadata of a data segment of the storage engine;
acquiring a second log data set after a creation time of the metadata of the data segment from a log of the storage engine; and
determining second garbage amount information after the creation time of the metadata of the data segment according to log data in the second log data set, and supplementing the second garbage amount information to the first garbage amount information.

In this embodiment, the first garbage amount information included in the metadata of the data segment of the storage engine may be acquired; the log data after the creation time of the metadata of the data segment may be acquired from the log of the storage engine to form the second log data set, and the operation that generates garbage is searched for in the log data in the second log data set, to determine the second garbage amount information after the creation time of the metadata of the data segment, and then the second garbage amount information is fused with the first garbage amount information, that is, the second garbage amount information is supplemented to the first garbage amount information, so that the garbage amount information of the data segment may be more accurately restored, to facilitate determining an appropriate garbage collection strategy.

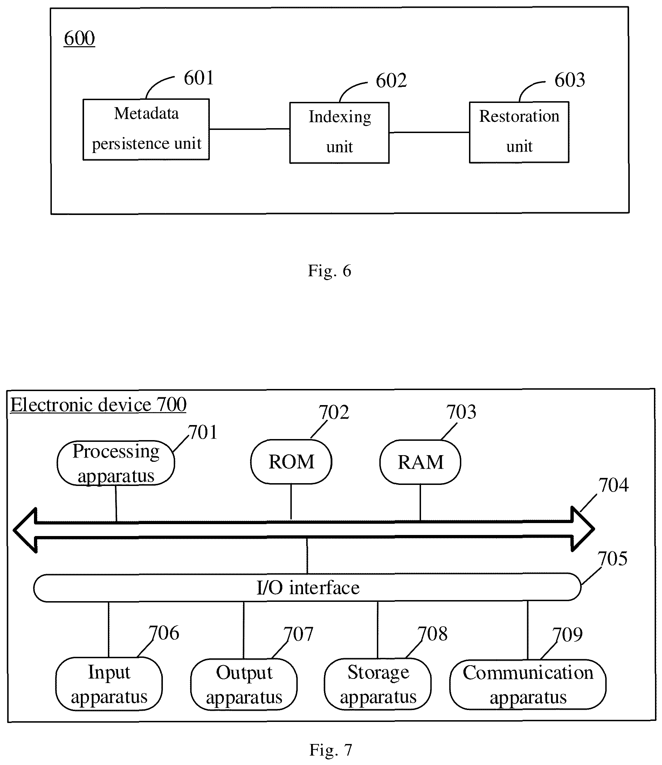

Corresponding to the method for processing metadata of a storage engine in the above embodiments, Fig. 6 is a block diagram showing the structure of a device for processing metadata of a storage engine according to an embodiment of the present disclosure. For ease of description, only the parts related to the embodiments of the present disclosure are shown. Referring to Fig. 6, the device 600 for processing metadata of a storage engine includes a metadata persistence unit 601 and an indexing unit 602.

The metadata persistence unit 601 is configured to create a checkpoint of each unpersisted metadata chunk in a memory used by the storage engine, persistently store respective checkpoints in a meta segment of a non-volatile storage medium in sequence, and record checkpoint index information of the respective checkpoints in the meta segment in the memory; where each metadata chunk includes metadata of a chunk managed by the storage engine.

The indexing unit 602 is configured to: in response to unpersisted checkpoint index information in the memory reaching a preset data amount, persistently store the unpersisted checkpoint index information in the meta segment by means of a checkpoint index information chunk, and add a pointer to a previous checkpoint index information chunk into the checkpoint index information chunk.

In an embodiment of the present disclosure, the indexing unit 602 is further configured to:
in response to the meta segment being full, add a pointer to a last checkpoint index information chunk into segment footer of the meta segment, where the pointer to the last checkpoint index information chunk is used to find the last checkpoint index information chunk.

In an embodiment of the present disclosure, the device further includes a restoration unit 603, configured to:
in response to an instruction to restore metadata being triggered, find a last checkpoint index information chunk from the meta segment;
find, according to checkpoint index information in the last checkpoint index information chunk, respective checkpoints corresponding to the checkpoint index information from the meta segment from the meta segment, and load the respective checkpoints in the memory to restore metadata chunks corresponding to the respective checkpoints to the memory; and
find a previous checkpoint index information chunk according to a pointer to the previous checkpoint index information chunk included in the last checkpoint index information chunk.

In an embodiment of the present disclosure, when the restoration unit 603 finds the last checkpoint index information chunk from the meta segment, it is configured to:
in response to a pointer to the last checkpoint index information chunk existing in segment footer of the meta segment, find the last checkpoint index information chunk according to the pointer to the last checkpoint index information chunk; or
in response to the pointer to the last checkpoint index information chunk not existing in the segment footer of the meta segment, scan the meta segment from back to front to find the last checkpoint index information chunk.

In an embodiment of the present disclosure, when the restoration unit 603 scans the meta segment from back to front, it is further configured to:
before the last checkpoint index information chunk is found, load a scanned checkpoint in the memory.

In an embodiment of the present disclosure, when the restoration unit 603 loads the checkpoints in the memory, it is configured to:
in response to multiple checkpoints related to a same chunk in the storage engine being found, load a latest checkpoint in the memory, and ignore other checkpoints than the latest checkpoint.

In an embodiment of the present disclosure, the restoration unit 603 is further configured to:
acquire a first log data set after a creation time of a last checkpoint in the meta segment; and
replay log data in the first log data set in sequence according to a time sequence, to generate, in the memory, metadata after the creation time of the last checkpoint.

In an embodiment of the present disclosure, the restoration unit 603 is further configured to: scan, in a data segment of the storage engine, data written after the creation time of the last checkpoint, to generate, in the memory, the data written after the creation time of the last checkpoint into corresponding metadata.

In an embodiment of the present disclosure, the restoration unit 603 is further configured to: persistently store, in the non-volatile storage medium, a mapping relationship between an internal identification of the chunk in the storage engine and an external identification of the chunk;
correspondingly, when the restoration unit 603 finds, according to the checkpoint index information in the last checkpoint index information chunk, respective checkpoints corresponding to the checkpoint index information from the meta segment and loads the respective checkpoints in the memory, it is configured to:
restore the mapping relationship to the memory; and
find, according to the checkpoint index information in the last checkpoint index information chunk, the respective checkpoints corresponding to the checkpoint index information from the meta segment, screen valid checkpoints according to the mapping relationship, and load the valid checkpoints in the memory.

In an embodiment of the present disclosure, the restoration unit 603 is further configured to:
in response to an instruction to exit the storage engine, create a checkpoint of each of all unpersisted metadata chunks in the memory, persistently store respective checkpoints in the meta segment in sequence, add a first identification after a last checkpoint, and then execute the instruction to exit the storage engine, where the first identification is used to represent that the storage engine normally exits;
in response to the instruction to restore the metadata being triggered, scan the meta segment from back to front, and in response to the first identification being detected, load the checkpoints in the meta segment into the memory to restore a full amount of metadata in the memory; and
add a second identification after the first identification, where the second identification is used to represent that the first identification is invalid.

In an embodiment of the present disclosure, the restoration unit 603 is further configured to:
compare a write time of each chunk in the data segment of the storage engine with a creation time of the corresponding checkpoint;
in response to the write time of all chunks being earlier than the creation time of the corresponding checkpoints, load the first data index information in the checkpoint into the memory; or
in response to the write time of at least one chunk being not earlier than the creation time of the corresponding checkpoint, load the first data index information in the checkpoint and the second data index information of the data written into the storage engine after the creation time of the last checkpoint in the meta segment into the memory.

In an embodiment of the present disclosure, when the restoration unit 603 loads the first data index information in the checkpoint and the second data information index information of the data written into the storage engine after the creation time of the last checkpoint in the meta segment into the memory, it is configured to:
scan the data segment of the storage engine to acquire the second data index information, and load the second data index information into the memory; and
when any operation instruction for any target data in the data segment is received, if data index information of the target data does not exist in the memory, determine a target checkpoint in which the data index information of the target data is located, load the first data index information in the target checkpoint into the memory, and fuse it with the second data index information.

In an embodiment of the present disclosure, the data segment includes data of the storage engine and multiple data index information chunks, and the multiple data index information chunks are scattered in the data segment, and any data index information chunk includes data index information of part of data and a pointer to the previous data index information chunk;
when the restoration unit 603 scans the data segment of the storage engine to acquire the second data index information and loads the second data index information into the memory, it is configured to:
scan the data segment from back to front until the second last data index information chunk in the data segment is scanned, and according to the pointer to the previous data index information chunk, find the remaining data index information chunks in the data segment forward in turn;
acquire data index information of the data after the second last data index information chunk; and
screen data index information of data written into the data segment after the creation time of the last checkpoint from the data index information of the data after the second last data index information chunk and the data index information included in the second last data index information chunk and the remaining data index information chunks, and load it into the memory as the second data index information.

In an embodiment of the present disclosure, the restoration unit 603 is further configured to:
acquire first garbage amount information included in metadata of a data segment of a storage engine;
acquire a second log data set after a creation time of the metadata of the data segment; and
determine second garbage amount information after the creation time of the metadata of the data segment according to log data in the second log data set, and supplement the second garbage amount information to the first garbage amount information.

The device provided in this embodiment may be used to perform the technical solutions of the above method embodiments, and the implementation principles and technical effects thereof are similar, and details are not repeated here in this embodiment.

In order to implement the above embodiments, an embodiment of the present disclosure further provides an electronic device.

Referring to Fig. 7, Fig. 7 shows a schematic diagram showing the structure of an electronic device 700 suitable for implementing the embodiments of the present disclosure, and the electronic device 700 may be a terminal device or a server. The terminal device may include, but is not limited to, mobile terminals such as a mobile phone, a notebook computer, a digital broadcast receiver, a personal digital assistant (abbreviated as PDA), a tablet computer, a portable media player (abbreviated as PMP), a vehicle-mounted terminal (such as a vehicle navigation terminal), etc., and fixed terminals such as a digital TV, a desktop computer, etc. The electronic device shown in Fig. 7 is only an example, and should not impose any limitation on the functions and the range of use of the embodiments of the present disclosure.

As shown in Fig. 7, the electronic device 700 may include a processing apparatus (such as a central processing unit, a graphics processor, etc.) 701, which may perform various appropriate actions and processing according to a program stored in a read-only memory (abbreviated as ROM) 702 or a program loaded into a random access memory (abbreviated as RAM) 703 from a storage apparatus 708. The RAM 703 further stores various programs and data required for the operation of the electronic device 700. The processing apparatus 701, the ROM 702, and the RAM 703 are connected to each other through a bus 704. An input/output (I/O) interface 705 is also connected to the bus 704.

Usually, the following apparatuses may be connected to the I/O interface 705: an input apparatus 706 including, for example, a touch screen, a touchpad, a keyboard, a mouse, a camera, a microphone, an accelerometer, a gyroscope, etc.; an output apparatus 707 including, for example, a liquid crystal display (Liquid Crystal Display, LCD for short), a speaker, a vibrator, etc.; a storage apparatus 708 including, for example, a magnetic tape, a hard disk, etc.; and a communication apparatus 709. The communication apparatus 709 may allow the electronic device 700 to perform wireless or wired communication with other devices to exchange data. Although Fig. 7 shows the electronic device 700 having various apparatuses, it should be understood that it is not required to implement or have all the apparatuses shown. Alternatively, more or fewer apparatuses may be implemented or provided.

In particular, according to the embodiments of the present disclosure, the process described above with reference to the flowchart may be implemented as a computer software program. For example, the embodiments of the present disclosure include a computer program product, which includes a computer program carried on a computer-readable storage medium, where the computer program contains program code for performing the method shown in the flowchart. In such an embodiment, the computer program may be downloaded and installed from a network through the communication apparatus 709, or installed from the storage apparatus 708, or installed from the ROM 702. When the computer program is executed by the processing apparatus 701, the above-mentioned functions defined in the method of the embodiments of the present disclosure are executed.

It should be noted that the above computer-readable storage medium in the present disclosure may be a computer-readable signal medium, a computer-readable storage medium, or any combination of the two. The computer-readable storage medium may be, for example, but not limited to, an electrical, magnetic, optical, electromagnetic, infrared, or semiconductor system, apparatus, or device, or any combination of the above. More specific examples of the computer-readable storage medium may include, but are not limited to: an electrically connected portable computer magnetic disk having one or more wires, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above. In the present disclosure, the computer-readable storage medium may be any tangible medium that contains or stores a program, and the program may be used by or in combination with an instruction execution system, apparatus or device. In the present disclosure, the computer-readable signal medium may include a data signal propagated in a baseband or as a part of a carrier wave, and computer-readable program code is carried therein. This propagated data signal may take many forms, including but not limited to an electromagnetic signal, an optical signal, or any suitable combination of the above. The computer-readable signal medium may also be any computer-readable storage medium other than the computer-readable storage medium, and the computer-readable signal medium may send, propagate, or transmit the program used by or in combination with the instruction execution system, apparatus or device. The program code contained on the computer-readable storage medium may be transmitted by any suitable medium, including but not limited to: a wire, an optical cable, RF (radio frequency), etc., or any suitable combination of the above.

The above computer-readable storage medium may be included in the above electronic device; or it may exist alone without being assembled into the electronic device.

The above computer-readable storage medium carries one or more programs, and when the above one or more programs are executed by the electronic device, the electronic device is caused to execute the method shown in the above embodiments.

Computer program code for performing the operations of the present disclosure may be written in one or more programming languages or a combination thereof, where the above programming languages include object-oriented programming languages such as Java, Smalltalk, and C++, and also include conventional procedural programming languages such as "C" language or similar programming languages. The program code may be executed entirely on a user's computer, partly executed on a user's computer, executed as an independent software package, partly executed on a user's computer and partly executed on a remote computer, or entirely executed on a remote computer or server. In the case involving a remote computer, the remote computer may be connected to the user's computer through any kind of network, including a local area network (Local Area Network, LAN for short) or a wide area network (Wide Area Network, WAN for short), or it may be connected to an external computer (for example, connected by using Internet provided by an Internet service provider).

The flowcharts and block diagrams in the drawings illustrate the possibly implemented architectures, functions, and operations of the systems, methods, and computer program products according to various embodiments of the present disclosure. In this regard, each block in the flowchart or block diagram may represent a module, program segment, or part of code, and the module, program segment, or part of code contains one or more executable instructions for implementing the specified logical functions. It should also be noted that, in some alternative implementations, the functions marked in the blocks may also occur in an order different from that marked in the drawings. For example, two blocks shown in succession may actually be executed substantially in parallel, or they may sometimes be executed in the reverse order, depending on the functions involved. It should also be noted that each block in the block diagram and/or the flowchart, and the combination of the blocks in the block diagram and/or the flowchart may be implemented by a dedicated hardware-based system that executes specified functions or operations, or may be implemented by a combination of dedicated hardware and computer instructions.

The involved units described in the embodiments of the present disclosure may be implemented by software or by hardware. The name of the unit does not constitute a limitation on the unit itself under certain circumstances, for example, the first acquisition unit may also be described as "a unit for acquiring at least two internet protocol addresses".

The functions described above may be performed at least partly by one or more hardware logic components. For example, without limitation, exemplary types of hardware logic components that may be used include: a field programmable gate array (FPGA), an application specific integrated circuit (ASIC), an application specific standard product (ASSP), a system on chip (SOC), a complex programmable logical device (CPLD), etc.

The electronic device, the computer-readable storage medium, and the computer program product provided in the embodiments of the present disclosure may be used to perform the technical solutions of the above method embodiments, and the implementation principles and technical effects thereof are similar, and details are not repeated here in this embodiment.

According to a first aspect, an embodiment or more of the present disclosure provide a method for processing metadata of a storage engine, including:
creating a checkpoint of each unpersisted metadata chunk in a memory used by the storage engine, persistently storing respective checkpoints in a meta segment of a non-volatile storage medium in sequence, and recording checkpoint index information of the respective checkpoints in the meta segment in the memory, where each metadata chunk includes metadata of a chunk managed by the storage engine; and
in response to unpersisted checkpoint index information in the memory reaching a preset data amount, persistently storing the unpersisted checkpoint index information in the meta segment by means of a checkpoint index information chunk, and adding a pointer to a previous checkpoint index information chunk into the checkpoint index information chunk.

According to one or more embodiments of the present disclosure, the method further includes:
in response to the meta segment being full, adding a pointer to a last checkpoint index information chunk into segment footer of the meta segment, where the pointer to the last checkpoint index information chunk is used to find the last checkpoint index information chunk.

According to one or more embodiments of the present disclosure, the method further includes:
in response to an instruction to restore the metadata being triggered, finding the last checkpoint index information chunk from the meta segment;
finding, according to checkpoint index information in the last checkpoint index information chunk, respective checkpoints corresponding to the checkpoint index information from the meta segment, and loading the respective checkpoints into the memory to restore the metadata chunks corresponding to the respective checkpoints to the memory; and
finding the previous checkpoint index information chunk according to the pointer to the previous checkpoint index information chunk included in the last checkpoint index information chunk.

According to one or more embodiments of the present disclosure, the finding the last checkpoint index information chunk from the meta segment includes:
in response to a pointer to the last checkpoint index information chunk existing in the segment footer of the meta segment, finding the last checkpoint index information chunk according to the pointer to the last checkpoint index information chunk; or
in response to the pointer to the last checkpoint index information chunk not existing in the segment footer of the meta segment, scanning the meta segment from back to front to find the last checkpoint index information chunk.

According to one or more embodiments of the present disclosure, the scanning the meta segment from back to front further includes:
before the last checkpoint index information chunk is found, loading a scanned checkpoint in the memory.

According to one or more embodiments of the present disclosure, the method further includes:
acquiring a first log data set after a creation time of a last checkpoint in the meta segment; and
replaying log data in the first log data set in sequence according to a time sequence, to generate, in the memory, metadata after the creation time of the last checkpoint.

According to one or more embodiments of the present disclosure, the method further includes:
scanning, in a data segment of the storage engine, data written after the creation time of the last checkpoint, to generate, in the memory, the data written after the creation time of the last checkpoint into corresponding metadata.

According to one or more embodiments of the present disclosure, the method further includes:
persistently storing, in the non-volatile storage medium, a mapping relationship between an internal identification of the chunk in the storage engine and an external identification of the chunk;
correspondingly, the finding, according to the checkpoint index information in the last checkpoint index information chunk, respective checkpoints corresponding to the checkpoint index information from the meta segment and loading the respective checkpoints into the memory includes:
restoring the mapping relationship to the memory; and
finding, according to the checkpoint index information in the last checkpoint index information chunk, the respective checkpoints corresponding to the checkpoint index information from the meta segment, screening valid checkpoints according to the mapping relationship, and loading the valid checkpoints into the memory.

According to one or more embodiments of the present disclosure, the method further includes:
in response to an instruction to exit the storage engine, creating a checkpoint of each of all unpersisted metadata chunks in the memory, persistently storing respective checkpoints into the meta segment in sequence, adding a first identification after a last checkpoint, and then executing the instruction to exit the storage engine, where the first identification is used to represent that the storage engine normally exits;
in response to the instruction to restore the metadata being triggered, scanning the meta segment from back to front, and in response to the first identification being detected, loading the checkpoints in the meta segment into the memory to restore a full amount of metadata in the memory; and
adding a second identification after the first identification, where the second identification is used to represent that the first identification is invalid.

According to one or more embodiments of the present disclosure, the method further includes:
comparing a write time of each chunk in a data segment of the storage engine with a creation time of a checkpoint corresponding to each chunk;
in response to the write time of all chunks being earlier than the creation time of checkpoints corresponding to all chunks, loading first data index information in the checkpoints corresponding to all chunks into the memory; or
in response to a write time of at least one chunk being not earlier than the creation time of at least one checkpoint corresponding to the at least one chunk, loading first data index information in the at least one checkpoint and second data index information of data written into the storage engine after a creation time of a last checkpoint in the meta segment into the memory.

According to one or more embodiments of the present disclosure, the loading the first data index information in the at least one checkpoint and the second data information index information of the data written into the storage engine after the creation time of the last checkpoint in the meta segment into the memory includes:
scanning the data segment of the storage engine to acquire the second data index information and loading the second data index information into the memory; and
in response to any operation instruction for any target data in the data segment being received and in response to data index information of the target data not existing in the memory, determining a target checkpoint in which the data index information of the target data is located, loading the first data index information in the target checkpoint into the memory, and fusing the first data index information with the second data index information.

According to one or more embodiments of the present disclosure, the data segment includes data of the storage engine and multiple data index information chunks, and the multiple data index information chunks are scattered in the data segment, and any data index information chunk includes data index information of part of data and a pointer to the previous data index information chunk;
the scanning the data segment of the storage engine to acquire the second data index information, and loading the second data index information into the memory includes:
scanning the data segment from back to front until a second last data index information chunk in the data segment is scanned, and according to the pointer to the previous data index information chunk, finding remaining data index information chunks in the data segment forward in turn;
acquiring data index information of data after the second last data index information chunk; and
screening data index information of data written into the data segment after the creation time of the last checkpoint from the data index information of the data after the second last data index information chunk, the data index information included in the second last data index information chunk and the data index information included in the remaining data index information chunks, and loading the data index information of data written into the data segment after the creation time of the last checkpoint into the memory as the second data index information.

According to one or more embodiments of the present disclosure, the method further includes:
acquiring first garbage amount information included in metadata of a data segment of a storage engine;
acquiring a second log data set after a creation time of the metadata of the data segment; and
determining second garbage amount information after the creation time of the metadata of the data segment according to log data in the second log data set, and supplementing the second garbage amount information to the first garbage amount information.

In a second aspect, an embodiment or more of the present disclosure provide a device for processing metadata of a storage engine, including:
a metadata persistence unit, configured to create a checkpoint of each unpersisted metadata chunk in a memory used by the storage engine, persistently store respective checkpoints in a meta segment of a non-volatile storage medium in sequence, and record checkpoint index information of the respective checkpoints in the meta segment in the memory; where each metadata chunk includes metadata of a chunk managed by the storage engine; and
an indexing unit, configured to: in response to unpersisted checkpoint index information in the memory reaching a preset data amount, persistently store the unpersisted checkpoint index information in the meta segment by means of a checkpoint index information chunk, and add a pointer to a previous checkpoint index information chunk into the checkpoint index information chunk.

According to one or more embodiments of the present disclosure, the indexing unit is further configured to:
in response to the meta segment being full, add a pointer to a last checkpoint index information chunk into segment footer of the meta segment, where the pointer to the last checkpoint index information chunk is used to find the last checkpoint index information chunk.

According to one or more embodiments of the present disclosure, the device further includes a restoration unit, configured to:
in response to an instruction to restore the metadata being triggered, find a last checkpoint index information chunk from the meta segment;
find, according to checkpoint index information in the last checkpoint index information chunk, respective checkpoints corresponding to the checkpoint index information from the meta segment from the meta segment , and load the respective checkpoints in the memory to restore the metadata chunks corresponding to the respective checkpoints to the memory; and
find a previous checkpoint index information chunk according to a pointer to the previous checkpoint index information chunk included in the last checkpoint index information chunk.

According to one or more embodiments of the present disclosure, when the restoration unit finds the last checkpoint index information chunk from the meta segment, it is configured to:
in response to the pointer to the last checkpoint index information chunk existing in segment footer of the meta segment, find the last checkpoint index information chunk according to the pointer to the last checkpoint index information chunk; or
in response to the pointer to the last checkpoint index information chunk not existing in the segment footer of the meta segment, scan the meta segment from back to front to find the last checkpoint index information chunk.

According to one or more embodiments of the present disclosure, when the restoration unit scans the meta segment from back to front, it is further configured to:
before the last checkpoint index information chunk is found, load a scanned checkpoint in the memory.

According to one or more embodiments of the present disclosure, the restoration unit is further configured to:
acquire a first log data set after a creation time of the last checkpoint in the meta segment; and
replay log data in the first log data set in sequence according to a time sequence, to generate, in the memory, metadata after the creation time of the last checkpoint.

According to one or more embodiments of the present disclosure, the restoration unit is further configured to:
scan, in a data segment of the storage engine, data written after a creation time of the last checkpoint, to generate, in the memory, the data written after the creation time of the last checkpoint into corresponding metadata.

According to one or more embodiments of the present disclosure, the restoration unit is further configured to:
persistently store, in the non-volatile storage medium, a mapping relationship between an internal identification of the chunk in the storage engine and an external identification of the chunk;
correspondingly, when the restoration unit finds, according to the checkpoint index information in the last checkpoint index information chunk, respective checkpoints corresponding to the checkpoint index information from the meta segment and loads the respective checkpoints in the memory, it is configured to:
restore the mapping relationship to the memory; and
find, according to the checkpoint index information in the last checkpoint index information chunk, the respective checkpoints corresponding to the checkpoint index information from the meta segment, screen valid checkpoints according to the mapping relationship, and load the valid checkpoints in the memory.

According to one or more embodiments of the present disclosure, the restoration unit is further configured to:
in response to an instruction to exit the storage engine, create a checkpoint of each of all unpersisted metadata chunks in the memory, persistently store respective checkpoints in the meta segment in sequence, add a first identification after a last checkpoint, and then execute the instruction to exit the storage engine, where the first identification is used to represent that the storage engine normally exits;
in response to the instruction to restore the metadata being triggered, scan the meta segment from back to front, and in response to the first identification being detected, load the checkpoints in the meta segment into the memory to restore a full amount of metadata in the memory; and
add a second identification after the first identification, where the second identification is used to represent that the first identification is invalid.

According to one or more embodiments of the present disclosure, the restoration unit is further configured to:
compare a write time of each chunk in the data segment of the storage engine with a creation time of the corresponding checkpoint;
in response to the write time of all chunks being earlier than the creation time of the corresponding checkpoints, load first data index information in the checkpoint into the memory; or
in response to the write time of at least one chunk being not earlier than the creation time of the corresponding checkpoint, load the first data index information in the checkpoint and second data index information of data written into the storage engine after a creation time of a last checkpoint in the meta segment into the memory.

According to one or more embodiments of the present disclosure, when the restoration unit loads the first data index information in the checkpoint and the second data information index information of the data written into the storage engine after the creation time of the last checkpoint in the meta segment into the memory, it is configured to:
scan the data segment of the storage engine to acquire the second data index information, and load the second data index information into the memory; and
when any operation instruction for any target data in the data segment is received, if data index information of the target data does not exist in the memory, determine a target checkpoint in which the data index information of the target data is located, load the first data index information in the target checkpoint into the memory, and fuse it with the second data index information.

According to one or more embodiments of the present disclosure, the data segment includes data of the storage engine and multiple data index information chunks, and the multiple data index information chunks are scattered in the data segment, and any data index information chunk includes data index information of part of data and a pointer to the previous data index information chunk;
when the restoration unit scans the data segment of the storage engine to acquire the second data index information and loads the second data index information into the memory, it is configured to:
scan the data segment from back to front until the second last data index information chunk in the data segment is scanned, and according to the pointer to the previous data index information chunk, find the remaining data index information chunks in the data segment forward in turn;
acquire data index information of the data after the second last data index information chunk; and
screen data index information of data written into the data segment after the creation time of the last checkpoint from the data index information of the data after the second last data index information chunk and the data index information included in the second last data index information chunk and the remaining data index information chunks, and load it into the memory as the second data index information.

According to one or more embodiments of the present disclosure, the restoration unit is further configured to:
acquire first garbage amount information included in metadata of a data segment of a storage engine;
acquire a second log data set after a creation time of the metadata of the data segment; and
determine second garbage amount information after the creation time of the metadata of the data segment according to log data in the second log data set, and supplement the second garbage amount information to the first garbage amount information.

In a third aspect, according to one or more embodiments of the present disclosure, an electronic device is provided, including: at least one processor and a memory;
the memory stores a computer-executable instruction; and
the at least one processor executes the computer-executable instruction stored in the memory, to enable the at least one processor to execute the method for processing metadata of a storage engine according to the first aspect and various possible designs of the first aspect.

In a fourth aspect, according to one or more embodiments of the present disclosure, a computer-readable storage medium is provided, where a computer-executable instruction is stored in the computer-readable storage medium, and when the computer-executable instruction is executed by a processor, the method for processing metadata of a storage engine according to the first aspect and various possible designs of the first aspect is implemented.

In a fifth aspect, according to one or more embodiments of the present disclosure, a computer program product is provided, including a computer program, where when the computer program is executed by a processor, the method for processing metadata of a storage engine according to the first aspect and various possible designs of the first aspect is implemented.

The above description is only preferred embodiments of the present disclosure and an explanation of the applied technical principles. Those skilled in the art should understand that the scope of disclosure involved in the present disclosure is not limited to the technical solutions formed by the specific combination of the above technical features, and should also cover other technical solutions formed by any combination of the above technical features or their equivalent features without departing from the above disclosure concept. For example, the above features and the technical features provided in the present disclosure (but not limited to) with similar functions may be replaced each other to form a technical solution.

In addition, although the various operations are depicted in a particular order, this should not be understood as requiring these operations to be performed in the particular order shown or in a sequential order. Under certain circumstances, multitasking and parallel processing may be advantageous. Similarly, although the above discussion contains several specific implementation details, these should not be interpreted as limiting the scope of the present disclosure. Certain features described in the context of separate embodiments may also be implemented in combination in a single embodiment. On the contrary, various features described in the context of a single embodiment may also be implemented in multiple embodiments individually or in any suitable sub-combination.

Although the subject matter has been described in a language specific to structural features and/or logical actions of the method, it should be understood that the subject matter defined in the appended claims is not necessarily limited to the specific features or actions described above. On the contrary, the specific features and actions described above are only exemplary forms of implementing the claims.

## Claims

1. A method for processing metadata of a storage engine, comprising:
creating (S201) a checkpoint of each unpersisted metadata chunk in a memory used by the storage engine, persistently storing respective checkpoints in a meta segment of a non-volatile storage medium in sequence, and recording checkpoint index information of the respective checkpoints in the meta segment in the memory, wherein each metadata chunk comprises metadata of a chunk managed by the storage engine; and
in response to unpersisted checkpoint index information in the memory reaching a preset data amount, persistently storing (S202) the unpersisted checkpoint index information in the meta segment by means of a checkpoint index information chunk, and adding a pointer to a previous checkpoint index information chunk into the checkpoint index information chunk.

2. The method of claim 1, further comprising:
in response to the meta segment being full, adding a pointer to a last checkpoint index information chunk into segment footer of the meta segment, wherein the pointer to the last checkpoint index information chunk is used to find the last checkpoint index information chunk.

3. The method of claim 1 or 2, further comprising:
in response to an instruction to restore the metadata being triggered, finding the last checkpoint index information chunk from the meta segment;
finding, according to checkpoint index information in the last checkpoint index information chunk, respective checkpoints corresponding to the checkpoint index information from the meta segment, and loading the respective checkpoints into the memory to restore the metadata chunks corresponding to the respective checkpoints to the memory; and
finding the previous checkpoint index information chunk according to the pointer to the previous checkpoint index information chunk comprised in the last checkpoint index information chunk.

4. The method of claim 3, wherein the finding the last checkpoint index information chunk from the meta segment comprises:
in response to a pointer to the last checkpoint index information chunk existing in the segment footer of the meta segment, finding the last checkpoint index information chunk according to the pointer to the last checkpoint index information chunk; or
in response to the pointer to the last checkpoint index information chunk not existing in the segment footer of the meta segment, scanning the meta segment from back to front to find the last checkpoint index information chunk.

5. The method of claim 4, further comprising:
before the last checkpoint index information chunk is found, loading checkpoints obtained by scanning the meta segment from back to front into the memory.

6. The method of any of claims 3 to 5, further comprising:
acquiring a first log data set after a creation time of a last checkpoint in the meta segment; and
replaying log data in the first log data set in sequence according to a time sequence, to generate, in the memory, metadata after the creation time of the last checkpoint.

7. The method of claim 6, further comprising:
scanning, in a data segment of the storage engine, data written after the creation time of the last checkpoint, to generate, in the memory, the data written after the creation time of the last checkpoint into corresponding metadata.

8. The method of any of claims 3 to 7, further comprising:
persistently storing, in the non-volatile storage medium, a mapping relationship between an internal identification of the chunk in the storage engine and an external identification of the chunk;
wherein the finding, according to the checkpoint index information in the last checkpoint index information chunk, respective checkpoints corresponding to the checkpoint index information from the meta segment and loading the respective checkpoints into the memory comprises:
restoring the mapping relationship to the memory; and
finding, according to the checkpoint index information in the last checkpoint index information chunk, the respective checkpoints corresponding to the checkpoint index information from the meta segment, screening valid checkpoints according to the mapping relationship, and loading the valid checkpoints into the memory.

9. The method of any of claims 3 to 8, further comprising:
in response to an instruction to exit the storage engine, creating a checkpoint of each of all unpersisted metadata chunks in the memory, persistently storing respective checkpoints into the meta segment in sequence, adding a first identification after a last checkpoint, and then executing the instruction to exit the storage engine, wherein the first identification is used to represent that the storage engine normally exits;
in response to the instruction to restore the metadata being triggered, scanning the meta segment from back to front, and in response to the first identification being detected, loading the checkpoints in the meta segment into the memory to restore a full amount of metadata in the memory; and
adding a second identification after the first identification, wherein the second identification is used to represent that the first identification is invalid.

10. The method of any of claims 3 to 9, further comprising:
comparing a write time of each chunk in a data segment of the storage engine with a creation time of a checkpoint corresponding to each chunk;
in response to the write time of all chunks being earlier than the creation time of checkpoints corresponding to all chunks, loading first data index information in the checkpoints corresponding to all chunks into the memory; or
in response to a write time of at least one chunk being not earlier than the creation time of at least one checkpoint corresponding to the at least one chunk, loading first data index information in the at least one checkpoint and second data index information of data written into the storage engine after a creation time of a last checkpoint in the meta segment into the memory.

11. The method of claim 10, wherein the loading first data index information in the at least one checkpoint and second data information index information of data written into the storage engine after the creation time of the last checkpoint in the meta segment into the memory comprises:
scanning the data segment of the storage engine to acquire the second data index information and loading the second data index information into the memory; and
in response to any operation instruction for any target data in the data segment being received and in response to data index information of the target data not existing in the memory, determining a target checkpoint in which the data index information of the target data is located, loading the first data index information in the target checkpoint into the memory, and fusing the first data index information with the second data index information.

12. The method of claim 11, wherein the data segment comprises data of the storage engine and multiple data index information chunks, and the multiple data index information chunks are scattered in the data segment, and any data index information chunk comprises data index information of part of data and a pointer to a previous data index information chunk;
the scanning the data segment of the storage engine to acquire the second data index information and loading the second data index information into the memory comprises:
scanning the data segment from back to front until a second last data index information chunk in the data segment is scanned, and according to the pointer to the previous data index information chunk, finding remaining data index information chunks in the data segment forward in turn;
acquiring data index information of data after the second last data index information chunk; and
screening data index information of data written into the data segment after the creation time of the last checkpoint from the data index information of the data after the second last data index information chunk, the data index information comprised in the second last data index information chunk and the data index information comprised in the remaining data index information chunks, and loading the data index information of data written into the data segment after the creation time of the last checkpoint into the memory as the second data index information.

13. The method of any of claims 3 to 12, further comprising:
acquiring first garbage amount information comprised in metadata of a data segment of the storage engine;
acquiring a second log data set after a creation time of the metadata of the data segment; and
determining second garbage amount information after the creation time of the metadata of the data segment according to log data in the second log data set, and supplementing the second garbage amount information to the first garbage amount information.

14. An electronic device, comprising: a processor and a memory;
wherein the memory stores a computer-executable instruction; and
the processor executes the computer-executable instruction stored in the memory, to enable the processor to execute the method of any of claims 1 to 13.

15. A non-transitory computer-readable storage medium, wherein a computer-executable instruction is stored in the non-transitory computer-readable storage medium, and when the computer-executable instruction is executed by a processor, the method of any of claims 1 to 13 is implemented.
